Europäisches Patentamt

European Patent Office

Office européen des brevets

(11) Publication number: **0 338 114**
**A1**

## (12) EUROPEAN PATENT APPLICATION

(21) Application number: **88106517.1**

(22) Date of filing: **22.04.88**

(51) Int. Cl.⁴: **B64C 3/20 , B64C 9/00 , C23F 1/04**

(43) Date of publication of application:
**25.10.89 Bulletin 89/43**

(84) Designated Contracting States:
**AT BE CH DE ES FR GB GR LI LU NL SE**

(71) Applicant: **CAPRONI VIZZOLA COSTRUZIONI AERONAUTICHE S.P.A.**
**Via per Tornavento, 15**
**I-21019 Somma Lombardo(IT)**

(72) Inventor: **Ferrarin, Carlo**
**Via La Torre 8**
**I-21018 Sesto Calende(IT)**

(74) Representative: **Prato, Roberto et al**
**c/o Ingg. Carlo e Mario Torta Via Viotti 9**
**I-10121 Torino(IT)**

(54) Method for manufacturing aircraft control surfaces.

(57) A method for manufacturing aircraft control surfaces via forward extrusion of a tubular element (2) having a constant section and longitudinal cores (8,9); which element presents a finished outer surface and a given thickness which is reduced to a predetermined value via internal chemical milling.

Fig.1

EP 0 338 114 A1

## METHOD FOR MANUFACTURING AIRCRAFT CONTROL SURFACES

The present invention relates to a method for manufacturing aircraft control surfaces.

The control surfaces of aircraft in general, and airplanes of any size in particular, usually consist of tubular elements composed of a front longitudinal member, a number of structural ribs, and a top and bottom face riveted together at the trailing edge, as well as to the front longitudinal member and structural ribs.

Despite enabling the use of structural elements designed and of such a thickness as to minimise weight, the above method nevertheless involves considerable construction cost.

The aim of the present invention is to provide a method for manufacturing aircraft control surfaces which are both lightweight and relatively cheap to produce.

With this aim in view, according to the present invention, there is provided a method for manufacturing aircraft control surfaces, characterised by the fact that it comprises stages consisting in:
- forming, by forward extrusion, a tubular element having a constant section and preferably at least one longitudinal core; said tubular element having a finished outer surface and a given thickness;
- reducing the said thickness to a predetermined value via internal chemical milling.

A non-limiting embodiment of the present invention will be described by way of example with reference to the accompanying drawings, in which :

Fig.1 shows a cross section of an aileron formed using the method according to the present invention;

Fig.2 shows a schematic view of one stage in the formation of the Fig.1 aileron.

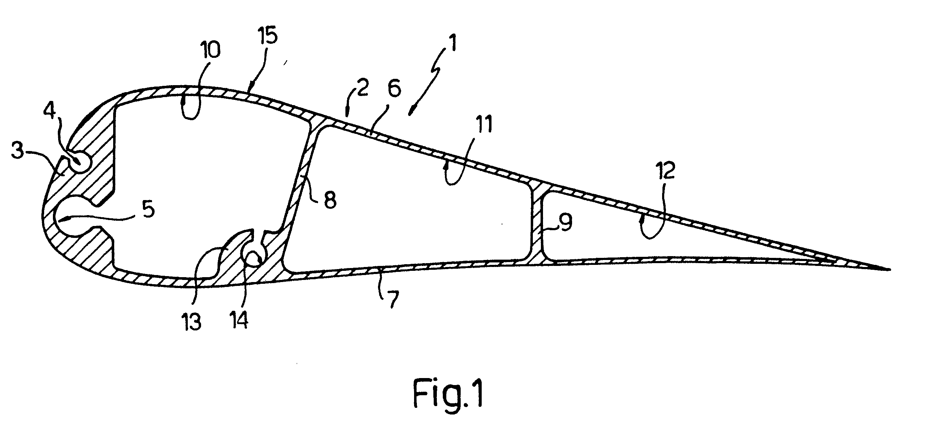

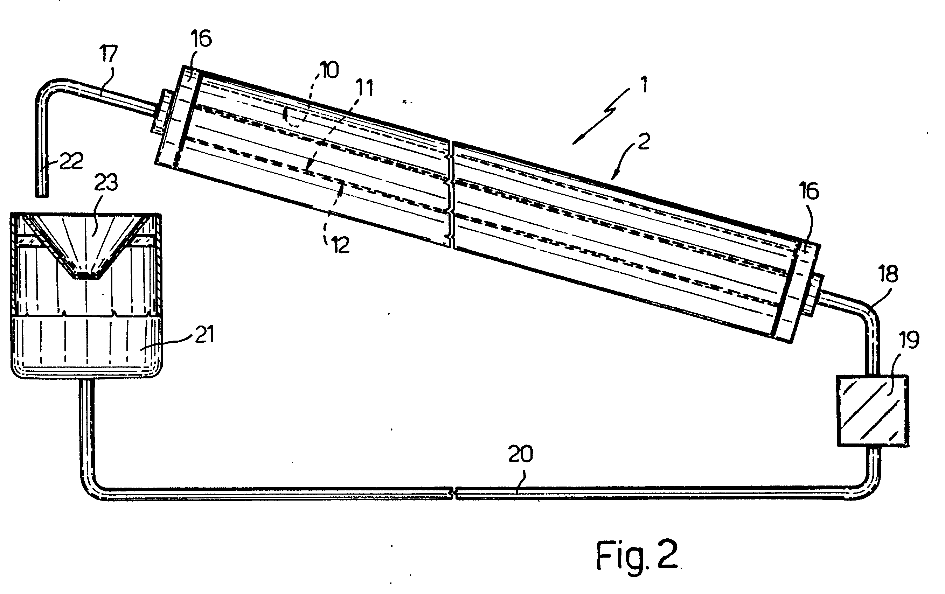

Number 1 in Fig.1 indicates an aileron consisting of a constant-section tubular element 2 (Fig. 2) formed by forward extrusion and comprising a longitudinal front outer rib 3 having a longitudinal outer groove 4 and a longitudinal inner groove 5 for housing balance weights (not shown). Tubular element 2 also comprises integral top and bottom faces 6 and 7 at the opposite transverse ends of rib 3. Finally, tubular element 2 comprises a longitudinal front inner core 8 and a longitudnal rear inner core 9 dividing the space inside tubular element 2 into three longitudinal ducts 10, 11 and 12. Inside front duct 10, there extends a longitudinal rib 13 integral with the bottom end of core 8 and having a longitudinal groove 14 defining a seat for a hinge (not shown) connecting aileron 1 to the respective wing (not shown).

In its extruded form, tubular element 2 presents a finish ed outer surface 15 requiring no further surface processing. Precisely on account of it being extruded, however, tubular element 2 necessarily presents relatively thick walls, for preventing breakage during extrusion, and the weight of which would be unacceptable.

As shown in Fig.2, the said excess wall thickness of tubular element 2 is removed by internal chemical milling. For this purpose, the opposite ends of ducts 10, 11 and 12 are closed off by covers 16, through which ducts 10, 11 and 12 communicate with a pipe 17 at one end and a pipe 18 at the other. Tubular element 2 is tilted slightly upwards, and pipe 18 at the bottom is connected to the delivery end of a pump 19, the inlet end of which is connected by pipe 20 to a tank 21 containing a corrosive solution. Pipe 17 terminates in a downturned spout 22 over a degassing funnel 23 fitted to the top of and communicating with tank 21.

In actual practice, forward-extruded tubular element 2 is fitted on to a support (not shown) in the tilted position shown in Fig.2, and connected to pump 19 and tank 21 by means of pipes 18 and 20. When pump 19 is started up, corrosive solution is sucked out of tank 21 and supplied by pump 19 to longitudinal ducts 10, 11 and 12. As, all other parameters being the same, the amount of material removed generally depends on how long the corrosive solution is left in contact with the metal, the said solution is pumped along ducts 10, 11 and 12 for the length of time required to obtain the required thickness of tubular element 2.

Subsequent to internal chemical milling as described above, aileron 1 is finished and ready for use. In fact, as already stated, internal chemical milling in no way affects the excellent surface finish of extruded tubular element 2, thus enabling the materials and labour normally required for surface finishing known control surfaces to be dispensed with.

## Claims

1) - A method for manufacturing aircraft control surfaces, characterised by the fact that it comprises stages consisting in :
- forming, by forward extrusion, a tubular element having a constant section and preferably at least one longitudinal core; said tubular element having a finished outer surface and a given thickness;
- reducing the said thickness to a predetermined value via internal chemical milling.

2) - A method as claimed in Claim 1, characterised by the fact that the said tubular element presents at least one longitudinal inner core dividing the space inside the said tubular element into at least two longitudinal ducts.

3) - A method as claimed in Claim 1 or 2, characterised by the fact that the said internal chemical milling process is performed by feeding a corrosive solution along the said tubular element for a given length of time.

4) - A method as claimed in Claim 3, characterised by the fact that, during the said chemical milling process, the said tubular element is supported in a tilted position; means being provided for continuously feeding the said corrosive solution from a tank to the bottom end of the said tubular element; and the top end of the said tubular element communicating with the said tank.

5) - A method as claimed in Claim 4, characterised by the fact that, prior to being fed back into the said tank, the said corrosive solution from the said tubular element is degassed.

Fig.1

Fig. 2.

EP 0 338 114 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 542 645 (CABROL) <br> * Page 1, line 28 - page 2, line 18; figures 1-3 * | 1 | B 64 C 3/20 <br> B 64 C 9/00 <br> C 23 F 1/04 |
| A | | 2 | |
| Y | METAL FINISHING ABSTRACTS, vol. 26, no. 6, November-December 1984, pages 374-375, Teddington, Middlesex, GB; & SU-A-1 980 863 (VITEBSK LIGHT IND. TECHNOL. INST., VITBEBSK, USSR) 22-07-1980 <br> * Page 374, right-hand column, last two lines - page 375, left-hand column, line 9 * | 1 | |
| A | FR-A-2 429 147 (FRANQUE) <br> * Page 1, lines 1-4,10-14; figure 1 * | 1,2 | |
| A | BE-A- 545 247 (TURCO) <br> * Page 12, line 27 - page 13, line 17; figure 2 * | 1 | TECHNICAL FIELDS SEARCHED (Int. Cl.4) |
| A | US-A-3 751 313 (D. BENEDETTO) <br> * Whole document * | 3,5 | B 64 C <br> F 03 D <br> B 21 C <br> C 23 F |

The present search report has been drawn up for all claims

| Place of search | Date of completion of the search | Examiner |
|---|---|---|
| THE HAGUE | 12-12-1988 | ZERI A. |

EPO FORM 1503 03.82 (P0401)